# EUROPEAN PATENT APPLICATION

(11) **EP 4 776 698 A1**
(43) Date of publication of application: **15.07.2026**
(21) Application number: 25222939.8
(22) Date of filing: 12.12.2025
(51) Int. Cl.: H04W 48/16, H04W 84/12, H04W 76/19

(54) **ADAPTIVE BEACON LISTENING INTERVAL SCHEME**

(30) Priority: 08.01.2025 US 202519013692
(71) Applicant: Arlo Technologies, Inc., Carlsbad, CA 92008 (US)
(72) Inventor: Qian, Nanjian, San Diego, CA, 92130 (US); Van Cleave, Todd, San Marcos, CA, 92078 (US)
(74) Representative: Grünecker Patent- und Rechtsanwälte PartG mbB

(57) **Abstract**

A monitoring device and a method are provided for adjusting a beacon listening interval in a monitoring device of an electronic monitoring system. The monitoring device is connectable to an access point over a communication network. The method includes establishing a connection between the monitoring device and the access point over the communications network. An initial beacon listening interval of the monitoring device is set. A count is maintained of at least one of a failure to receive a beacon from the access point and a failure of the connection between the monitoring device and the access point over the communications network. An attempt is made to reestablish the connection between the monitoring device and the access point over the communications network. If the count exceeds a threshold, the beacon listening interval is reduced, typically by a selected time period.

## Description

### BACKGROUND OF THE INVENTION

### 1. Field of the Invention

This invention relates generally to electronic monitoring systems, and in particular, to an adaptive beacon listening interval scheme that improves the WiFi connection rate of the various monitoring devices of an electronic monitoring system.

### 2. Discussion of the Related Art

Modern electronic monitoring systems for the home and other premises include various components including video and audio communication technology. For example, the typical electronic monitoring system includes a plurality of monitoring devices configured to perform any of a variety of monitoring, sensing, and communicating functions, including acquiring data, processing the acquired data, and transmitting the processed acquired data to a base station for further processing and/or transmission to a cloud-based server and/or one or more user device(s), such as smart phone(s), tablet(s) PC(s), or laptop computer(s). These monitoring devices include imaging devices or cameras directed at various activity zones to be monitored for the simultaneous video and audio communication to a user on a computing device; one or more sensors configured to detect one or more types of conditions or stimuli, for example, motion, opening or closing events of doors or windows, the presence of smoke, carbon monoxide, water leaks, or temperature changes; and/or one or more audio devices such as microphones, sound sensors, and speakers configured for audio communication or for providing audible alerts. Upon detection of an activity, such as sound or motion, in an activity zone or upon a captured image of an activity zone matching a predetermined image, the electronic monitoring system triggers an alert which is transmitted to the user device over a communications network to notify the user of the detected activity.

It can be understood that the imaging devices, security cameras, sensors, microprocessors, and communication systems of the electronic monitoring system must all work together to insure the proper functioning of the system. Data must be digitized, recorded, relayed, processed, analyzed, and shared among the various components of the system. Hence, trustworthy communication of data between the various components of the electronic monitoring system is essential for the proper operation of the system.

In order to facilitate communication over the communications network, the base station includes a router for accessing a Wide Area Network (WAN), such as the Internet, and an access point for allowing the monitoring devices to communicate on the WAN through a Local Area Network (WLAN). The access point and router may be integrated into a single device. In order to announce the presence of the WLAN and to provide a timing signal to synchronize communications with the monitoring devices, the access point periodically transmits a beacon. The intervals between transmissions are known as the "beacon intervals". Typically, a monitoring device will periodically scan the WiFi channels searching for beacons announcing the presence of nearby access points. The intervals between the scans of the WiFi channels are known as the "beacon listening intervals." With receipt of the beacon, the monitoring device receives information about the capabilities and configuration of the WLAN, as well as a list of available eligible networks, sorted by signal strength. This, in turn, allows the monitoring device to selectively connect to the optimal WLAN.

Heretofore, the various monitoring devices of prior electronic monitoring systems have experienced frequent WiFi disconnections in the field. Although some of these connection failures are caused by environmental factors, many of the failures are the direct result of the long beacon listening interval settings of the monitoring devices. The monitoring devices have long beacon listening interval values in order to minimize power consumption. However, by having long beacon listening interval values, the monitoring device may not receive all of the necessary information about the capabilities and configuration of the WLAN. Consequently, the monitoring device may be unable to setup a WiFi connection, or may frequently lose the WiFi connection. It can be understood that attempts to reconnect to the WiFi network using a long beacon interval may consume more power than if a shorter beacon listening interval value is used, thereby defeating the purpose of utilizing longer beacon listening intervals.

Therefore, it is a primary object and feature of the present invention to provide an adaptive beacon listening interval scheme that improves the WiFi connection rate of the various monitoring devices of an electronic monitoring system.

It is a further object and feature of the present invention to provide an adaptive beacon listening interval scheme that improves the WiFi connection rate of the various monitoring devices of an electronic monitoring system while minimizing the impact on the battery consumption of the monitoring devices.

It is a still further object and feature of the present invention to provide an adaptive beacon listening interval scheme that improves the WiFi connection rate of the various monitoring devices of an electronic monitoring system and that is simple and inexpensive to implement.

### SUMMARY OF THE INVENTION

In accordance with an aspect of the present invention, a method is provided for adjusting a beacon listening interval in a monitoring device of an electronic monitoring system. The monitoring device is connectable to an access point over a communication network. The method includes establishing a connection between the monitoring device and the access point over the communications network. An initial beacon listening interval of the monitoring device is set. It is determining if at least one of a failure to receive a beacon from the access point and a failure of the connection between the monitoring device and the access point over the communications network has occurred;

A count of the failures is maintained. An attempt is made to reestablish the connection between the monitoring device and the access point over the communications network. If the count exceeds a threshold, the beacon listening interval is reduced, typically but not necessarily, by a selected time period.

The beacon listening interval may be stored in a non-volatile memory (NVM) database on the monitoring device. After reducing the initial beacon listening interval by the selected time period to provide the updated beacon listening interval, the counter is reset and, once again, an attempt is made to reestablish the connection between the monitoring device and the access point over the communications network. A count of the at least one of the failure to receive the beacon from the access point and the failure of the connection between the monitoring device and the access point over the communications network with the reset counter is maintained. If the count maintained by the reset counter exceeds the threshold, the beacon listening interval is reduced by the same or a different selected time period. If the beacon listening interval is at a lower limit, the beacon listening interval is maintained at the limit, and an attempt is made to reestablish the connection between the monitoring device and the access point over the communications network.

In accordance with a further aspect of the present invention, a method is provided for adjusting a beacon listening interval in a monitoring device of an electronic monitoring system. The monitoring device is connectable to an access point over a communication network. The method includes setting a beacon listening interval of the monitoring device and monitoring a connection between the monitoring device and the access point over the communications network. It is determined if at least one of a failure to receive a beacon from the access point and a failure of the connection between the monitoring device and the access point over the communications network has occurred. A count of the failures is maintained and, if the count exceeds a threshold, the beacon listening interval is reduced, typically but not necessarily, by a selected time period.

The beacon listening interval may be stored in a non-volatile memory (NVM) database on the monitoring device. A connection is established between the monitoring device and the access point over the communications network prior to monitoring the connection. After reducing the beacon listening interval, the counter is reset, and an attempt is made to reestablish the connection between the monitoring device and the access point over the communications network. A count of the at least one of the failure to receive the beacon from the access point and the failure of the connection between the monitoring device and the access point over the communications network with the reset counter is maintained. If the count maintained by the reset counter exceeds the threshold, the beacon listening interval is reduced. Thereafter, the counter is reset. If the beacon listening interval is at a limit, the beacon listening interval is maintained at the limit and an attempt is made to reestablish the connection between the monitoring device and the access point over the communications network.

In accordance with a further aspect of the present invention, a monitoring device of an electronic monitoring system is provided. The monitoring device including a beacon listening interval having an initial value and the electronic monitoring system including an access point transmitting a beacon at periodic intervals over a communications network. The monitoring device includes a wireless local area network (WLAN) radio connectable to the communications network and being configured for communication with the access point. A controller is operatively connected to the WLAN radio and is configured to establish a connection between the WLAN radio and the access point over the communications network. In addition, the controller is configured to maintain a count of at least one of a failure to receive a beacon from the access point and a failure of the connection between the WLAN radio and the access point over the communications network. If the count exceeds a threshold, the beacon listening interval is reduced, typically but not necessarily, by a selected time period.

The monitoring device may also include non-volatile memory (NVM) database configured to store the beacon listening interval. The controller is configured to cause the WLAN radio to attempt to reestablish the connection with the access point over the communications network in response to the failure of the connection between the WLAN radio and the access point over the communications network. After reducing the beacon listening interval by the selected time period, the controller is configured to reset the counter and cause the WLAN radio to attempt to reestablish the connection with the access point over the communications network. In addition, the controller is configured to maintain a count of the at least one of the failure to receive the beacon from the access point and the failure of the connection between the monitoring device and the access point over the communications network after counter is reset. If, after the counter is reset, the count maintained by the counter exceeds the threshold, the beacon listening interval is reduced. If the beacon listening interval is at a limit, the controller is configured to maintain the beacon listening interval at the limit and to attempt to reestablish the connection between the monitoring device and the access point over the communications network.

The monitoring device may also include a camera operatively connected to the controller. The camera is configured to capture images within a field of view.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Preferred exemplary embodiments of the invention are illustrated in the accompanying drawings in which like reference numerals represent like parts throughout, and in which:
FIG. 1 is a schematic representation of an electronic monitoring system according to aspects of the invention;
FIG. 2 is a flowchart illustrating one embodiment of a procedure for operatively connecting a monitoring device to the electronic monitoring system of FIG. 1; and
FIG. 3 is a flowchart illustrating a procedure for dynamically adjusting a beacon listening interval setting in a monitoring device of the electronic monitoring system of FIG. 1.

### DETAILED DESCRIPTION

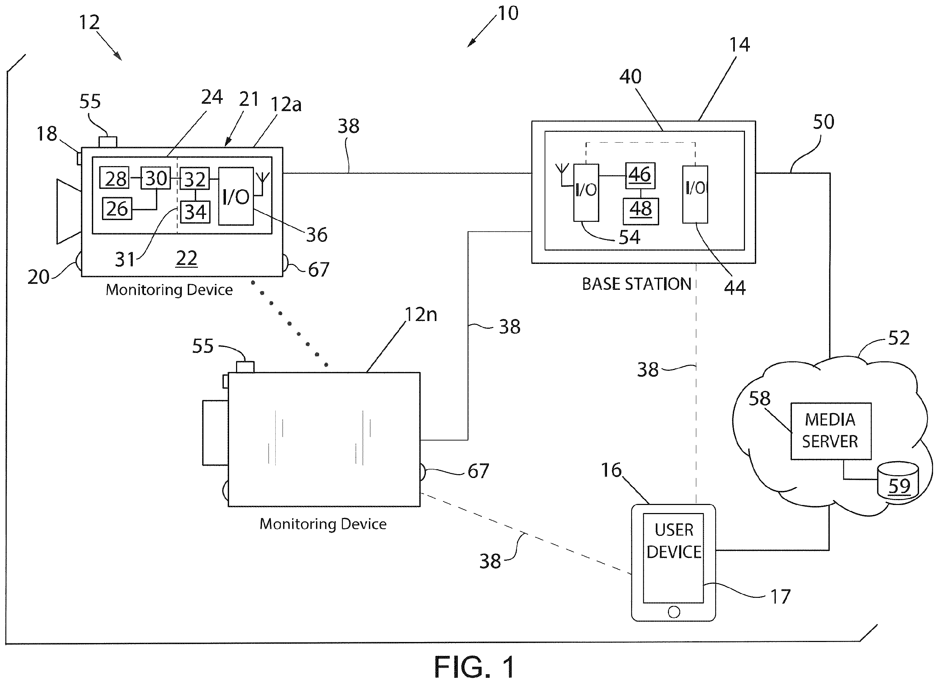

Referring now to FIG. 1, in accordance with an aspect of the invention, an electronic system 10 for real-time monitoring of an area can include one or more monitoring devices 12 and a hub or base station 14. A number "n" 12a-12n of monitoring devices are schematically illustrated in FIG. 1. Unless otherwise specified, all references to an "imaging device" 12 or a "monitoring device" 12 should be construed to apply equally to any of the monitoring devices 12a-12n. One or more user devices 16, such as a smart phone, tablet, laptop, or PC, communicate with the base station 14. Each user device 16 includes a display that typically includes both an audio display and a video display, internal computing and storage capabilities, and a program or application servicing as a user interface for the system 10. In the case of a smart phone, the display typically will include a touch screen and a speaker.

Each monitoring device 12 is configured to perform any of a variety of monitoring, sensing, and communicating functions, including acquiring data, processing the acquired data, and transmitting the processed acquired data to the base station 14 for further processing and/or transmission to a server and/or the user device(s) 16. Each monitoring device 12 may be battery powered or wired. Several such monitoring devices may be mounted around a building or other structure or area being monitored. For example, in the case of a residential home, monitoring devices 12 could be mounted by each entrance, selected windows, and even on a gate or light pole. A monitoring device 12 also could be incorporated into or coupled to a doorbell, floodlight, etc. The monitoring devices 12 may comprise any combination of devices capable of monitoring a designated area or activity zone such as a home, office, industrial or commercial building, yard, parking or storage lot, etc. Each individual monitoring device 12 may monitor one or a combination of parameters such as motion, sound, temperature etc. It is contemplated for each monitoring device 12 to include a controller 31 having a processor 32 and non-transient memory storage, such as non-volatile memory 34, and/or a wireless I/O communication device 36, among other things, to effectuate the monitoring function of monitoring device 12.

Each of the individual monitoring devices 12 may be or include still or video cameras, temperature sensors, microphones, motion sensors, etc. At least one such monitoring device 12, one of which is shown at shown at 12a in FIG. 1, is an imaging device described in more detail below. The data acquired by imaging device 12a typically will correspond to a video image, and each imaging device 12a may be or include a camera such as a video camera 21. In addition, as labeled on imaging device 12a, one or more of the imaging devices may include microphone 18, visible and/or infrared (IR) lights 20, a power supply 22 such as a battery or battery pack, and/or imaging device electronic circuitry 24. Circuitry 24 may include one or more imagers 26, an audio circuit 28, and a media encoder 30, among other things, operatively connected to controller 31.

Instead of or in addition to containing a video camera 21 or other imaging device, one or all of the monitoring devices 12 may include one or more sensors 55 configured to detect one or more types of conditions or stimulus, for example, motion, opening or closing events of doors or windows, sounds such as breaking glass or gunshots, the presence of smoke, carbon monoxide, water leaks, and temperature changes. The monitoring devices 12 may further include or be other devices such as audio devices, including microphones, sound sensors, and speakers configured for audio communication or providing audible alerts, such as Arlo ChimeTM audible devices. The imaging devices or cameras 21, sensors 55, or other monitoring devices 12 also may be incorporated into form factors of other house or building accessories, such as doorbells, floodlights, etc., each which may be available on a stand-alone basis or as part of any of a number of systems available from Arlo Technologies, Inc. of Carlsbad, California.

Each monitoring device 12 can communicate with base station 14 through network 38. It is contemplated that the network 38 may be in whole or in part a wired network, a wireless network, or a combination thereof. The network 38 may include a private Wireless Local Area Network (WLAN), hosted by the base station 14 operating as an access point. One such network is an IEEE 802.11 network. It is contemplated for monitoring devices 12 to utilize Transmission Control Protocol (TCP) to send data packets across network 38 to ensure the successful delivery of data to base station 14. As is known, in order to ensure that all data packets received will be identical to and in the same order as those sent, TCP utilizes a technique known as positive acknowledgment with re-transmission. This technique requires the receiver, e.g. base station 14, to respond to the sender, e.g. monitoring devices 12, with an acknowledgment message as the data packets are received.

In addition, each monitoring device 12 further is programmed to have an initial fixed beacon listening interval. The beacon listening interval between which the monitoring device 12 periodically scans network 38 searching for beacons announcing the presence of nearby access points. The interval is set by a timer. The interval between the scans of network 38 is defined as the beacon listening interval. Upon receiving the beacon, monitoring device 12 obtains information about the capabilities and configuration of network 38, as heretofore described. The value of the initial fixed beacon listening interval for each monitoring device 12 may be preset (e.g. 1 second) and stored in a non-volatile memory database 34 on the monitoring device 12.

The hub or base station 14 can include base station electronic circuitry 40 including router 54 for communicating with the monitoring devices 12 over network 38, a second wired or wireless I/O communication device or modem 44 for accessing a Wide Area Network (WAN) 50, such as the Internet through a Local Area Network (WLAN) 52, a processor 46 and/or a non-transient memory storage 48, among other things. It can be understood that router 54 and/or modem may comprise a second device or be combined with base station 14, wherein either configuration would still be considered a "base station" within the meaning of the present disclosure. It also should be apparent that "circuity" may comprise hardware, firmware, software, or any combination thereof.

As is conventional, to announce the presence of a WLAN, e.g. network 38, and to provide a timing signal to synchronize communications with the devices using network 38, the access point, e.g. at base station 14, periodically transmits a beacon frame or beacon on network 38. The beacon includes information about the capabilities and configuration of network 38. Typically, the beacon is transmitted every 100 milliseconds (ms). However, other intervals are contemplated as being within the scope of the present invention.

Still referring to FIG. 1, the base station 14 may also be in communication with a server 58, which may be on a cloud-based control service system 52 accessible via the WAN 50. Server 58 can include or be coupled to a microprocessor, a microcontroller or other programmable logic element 59 (individually and collectively considered "a controller") configured to execute a program. Alternatively, interconnected aspects of the controller and the programs executed by it could be distributed in various permutations within monitoring device 12, base station 14, user device 16, and server 58. This program, while operating at the server level, may be utilized in filtering, processing, categorizing, storing, recalling and transmitting data received from the monitoring devices 12 via the base station 14.

In order to on-board/integrate a monitoring device 12 having a camerainto monitoring system 10, it is necessary to provide monitoring device 12 with access credentials for the access point to the frequency band of network 38 broadcast by router 54 of base station 14. More specifically, router 54 of base station 14 is initialized so as to broadcast network 38 on a frequency band having its own unique network name and corresponding password. The connection point to the frequency band is an access point. In addition, when initialized, router 54 connects to WAN 50 so as to interact with server 58 and provides server 58 with data regarding the access credentials for the frequency band being broadcast. If a user utilizes a PC or laptop to interact with router 54, the user may access the device through a user account set up on server 58. Alternatively, if the user utilizes a mobile device, such as a smart phone or tablet, an application may be provided thereon which allows the user access to their account.

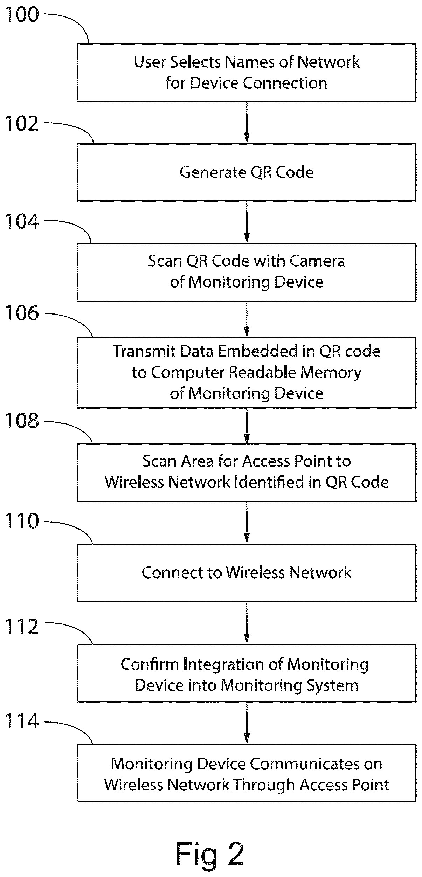

Referring to FIG. 2, a process for operatively connecting a monitoring device to the electronic monitoring system of FIG. 1 is illustrated via which a user can gain access to the network name and corresponding password for the access point to the frequency band of network 38 broadcast by router 54, either by direct communication with the router 54 through user device 16 or through communication with server 58, block 100. It is contemplated for the user to change the network name and corresponding password to a user-selected network name and corresponding user-selected password, if so desired by the user.

Upon completion of the naming of the network name and corresponding password for the access point, a user may be prompted on user device 16 to select the type of monitoring device 12 to be added to monitoring system 10, e.g., a smart security camera system. It is contemplated for the user to select the type of monitoring device 12 to be added to monitoring system 10 through a drop-down menu displayed on user device 16 or by the user entering an identification code (e.g., a UPC code) corresponding to the type of monitoring device 12 to be added.

Once the type of monitoring device 12, in this case a smart camera, is selected, the program or application on the user device 16 generates a machine/computer-readable code, such as a QR code, at block 102. The code includes data corresponding to the access point and associated access credentials (or in other words the network name and corresponding password selected by the user) embedded therein which are required for monitoring device 12 to connect to the access point of network. As is known, a QR code is comprised of black squares arranged in a square grid on a white background, which can be read by an imaging device such as a camera, processed, and appropriately interpreted to allow for the transfer of the data embedded in the code. The QR code may be displayed on display 17 of user device 16, or the QR code may be printed out by a user.

After being powered up, monitoring device 12 may be placed in a connection mode to transfer data thereto. By way of example, a user may press and release sync button 67 on monitoring device 12 (FIG. 1) to cause monitoring device 12 to enter the connection mode in which the data corresponding to the access point and the associated access credentials which are required for monitoring device 12 to connect to network 38 may be transferred thereto. More specifically, with monitoring device 12 in its connection mode, a visual display, such as a blinking LED, is provided to indicate to the user that imaging device 21 of monitoring device 12 is now configured to scan the QR code, heretofore described. Imaging device 21 of monitoring device 12 is positioned within a set range of (e.g., approximately 8 inches) and directed at the QR code such that the QR code is within the field of view of imaging device 21 of monitoring device 12. When imaging device 21 of monitoring device 12 reads the QR code, monitoring device 12 and/or user device 16 may provide an audible or graphic signal informing the user that monitoring device 12 has read the QR code and received the data embedded in the QR code. If no signal is provided, the process may be repeated.

Once the QR code is scanned by imaging device 21 of monitoring device 12, controller 31 of monitoring device 12 causes the data embedded in the QR code to be processed, appropriately interpreted, and transmitted to non-volatile memory 34 for future reference, block 106. In addition, controller 31 causes monitoring device 12 to scan the area for the access point identified in the data received via the QR code, block 108. Once the access point is identified, controller 31 causes primary wireless I/O communication device 36 of monitoring device 12 to connect to the access point utilizing the network name and corresponding password for the access point obtained via the QR code, block 110. Once connected to network 38, monitoring device 12 may send and receive data over network 38 to base station 14 and through monitoring system 10 to server 58, and typically from network 38 to WAN 50 for processing by server 58. Once monitoring device 12 connects to network 38, a serial number of and/or other information concerning the monitoring device 12 may be transmitted to server 58. Server 58 may provide confirmation of the successful integration of monitoring device 12 into monitoring system 10, block 112. For example, server 58 may cause the serial number of monitoring device 12 and the time zone in which monitoring device resides to be transmitted to user device 16 for display on display 17.

With monitoring device 12 integrated into monitoring system 10, data packets corresponding to sounds, images, captured frames, and/or video clips captured by the camera of monitoring device 12 may be transmitted by monitoring device 12 over network 38 to the base station 14, to the server 58 over WAN 50, and/or to the one of more user devices 16, block 114. Further, data packets from one of more user devices 16, server 58 or the various components of monitoring system 10 may be transmitted to monitoring device 12 over network 38.

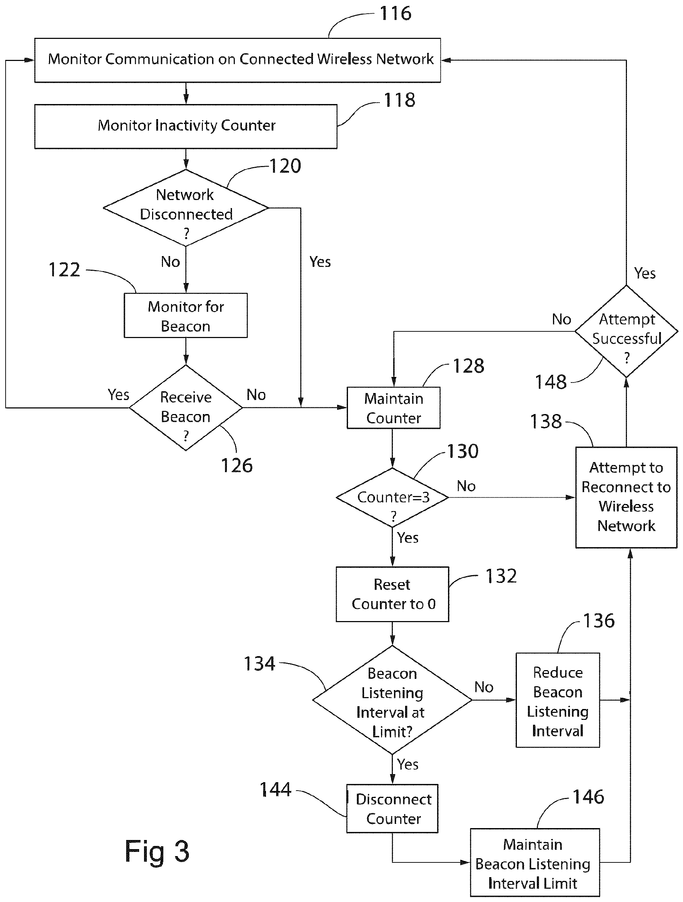

Referring to FIG. 3, during operation, controller 31 of monitoring device 12 monitors communications on network 38, block 116. If controller 31 of monitoring device 12 senses no disruption in communication, monitoring device 12 remains in the default operational state and communications continue through the access point. If the noted monitoring device 12 and/or base station 14 are disconnected from network 38, controller 31 of monitoring device 12 will sense the connectivity issue or communication(s) disruption, block 120. Monitoring device 12 includes a communication failure counter that maintains a count of the communication failures on network 38, block 128. After each disruption in the connection between a noted monitoring device 12 and network 38, controller 31 causes primary wireless I/O communication device 36 of monitoring device 12 to attempt to reconnect the monitoring device 12 to network 38 through the access point, block 138. If it is determined in block 148 that the reconnection attempt is successful, monitoring device 12 is restored to the default operational state, and system communications continue through the access point, as heretofore described beginning with block 116. If not, the counter is maintained in block 128, and the operations beginning with block 128 are repeated.

Further, with monitoring device 12 and base station 14 connected to network 38, as heretofore described, the access point, e.g. at base station 14, periodically transmits a beacon frame or beacon on network 38, e.g. every 100 milliseconds (ms). Monitoring device 12 periodically scans network 38 at the initial fixed beacon listening interval (e.g. every 1 second) for the beacon announcing the presence of the access point, block 122. If monitoring device 12 receives the beacon, block 126, monitoring device 12 remains in the default operational state and communications continue through the access point, block 116.

In the event that monitoring device 12 does not receive the beacon during the beacon listening interval, the count of communication failures on network 38 maintained by communication failure counter of monitoring device 12 is increased, block 128. If the count maintained by communication failure counter of monitoring device 12 reaches a threshold value (e.g. a combination of either 3 beacon receipt failures and/or network disconnections), block 130, controller 31 will reset the counter to 0 in block 132 and execute instructions in block 134 to determine whether the beacon listening interval is less or equal to a preselected limit of, for example, e.g. 100 milliseconds. If not, the controller 31 will reduce the beacon listening interval a predetermined time period of, for example, 100 milliseconds in block 136, and the updated time period for the beacon listening interval will be stored in non-volatile memory 34. Thereafter, primary wireless I/O communication device 36 of the noted monitoring device 12 then will attempt to reconnect the noted monitoring device 12 to network 38 through the access point, block 138. If it is determined in block 148 that the reconnection attempt is successful, monitoring device 12 is restored to the default operational state, and system communications continue through the access point, block 116. If not, the process beginning with block 128 is repeated, now with the reduced beacon listening interval setting.

If, it is ultimately determined in block 134 that the time period of the beacon listening interval is reduced to an interval less than or equal to the present limit, e.g. 100 milliseconds, the time period of the beacon listening interval will be fixed at the preset limit and no longer be reduced. As such, controller 31 of monitoring device 12 may execute a program to: disable the communication failure counter, block 144; maintain the time period of the beacon listening interval at the preset limit, e.g. 100 milliseconds, block 146; and cause primary wireless I/O communication device 36 of the noted monitoring device 12 to attempt to reconnect the noted monitoring device 12 to network 38 through the access point, block 138. If it is determined in block 148 that the reconnection attempt is successful, monitoring device 12 is restored to the default operational state and system communications continue to be monitored through the access point, block 116. If it is determined at decision block 148 that the reconnection attempt has failed, the process will return to block 128, with the result now being that the controller 31 of monitoring device 12 will continue to attempt reconnection to network 38, cycling through blocks 128, 130, 132, 134, 136, 144, 146, 138, and 148 with the counter disabled and the beacon listening interval retained at the preset limit reduced limit.

As described, an adaptive scheme is provided for changing the beacon interval listening settings for the various devices of an electronic monitoring system such that the time period for the beacon listening interval may be customized for each monitoring device 12 of monitoring system 10. Although the operations described above with reference to FIG. 2 are described in conjunction with an imaging device 12a, it is to be understood that the same are comparable functions could be performed with the more generic monitoring device 12 of FIG. 1 or any of a variety monitoring devices as well, so long as the monitoring device has the capability of receiving the credentials of the access point to network 38 or otherwise acquiring the required data.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

## Claims

1. A method for adjusting a beacon listening interval in a monitoring device of an electronic monitoring system, the monitoring device connectable to an access point over a communication network, the method comprising:
establishing a connection between the monitoring device and the access point over the communications network;
setting an initial beacon listening interval of the monitoring device;
determining if at least one of a failure to receive a beacon from the access point and a failure of the connection between the monitoring device and the access point over the communications network has occurred;
maintaining a count of the failures;
attempting to reestablish the connection between the monitoring device and the access point over the communications network; and
if the count exceeds a threshold, reducing the beacon listening interval to obtain an updated beacon listening interval.

2. The method of claim 1 or claim 2, wherein the beacon listening interval is stored in a non-volatile memory (NVM) database on the monitoring device.

3. The method of any of claims 1-3, further comprising, after reducing the initial beacon listening interval by the selected time period to provide the updated beacon listening interval:
resetting the counter; and
attempting to reestablish the connection between the monitoring device and the access point over the communications network.

4. The method of claim 3, further comprising:
maintaining a count of the at least one of the failure to receive the beacon from the access point and the failure of the connection between the monitoring device and the access point over the communications network with the reset counter; and
if the count maintained by the reset counter exceeds the threshold, reducing the beacon listening interval.

5. The method of claim 4, wherein, if beacon listening interval is at a limit:
maintaining the beacon listening interval at the limit; and
attempting to reestablish the connection between the monitoring device and the access point over the communications network.

6. The method of any of claims 1-5, wherein the updated beacon listening interval is a selected time period.

7. A monitoring device of an electronic monitoring system, the monitoring device including a beacon listening interval having an initial value and the electronic monitoring system including an access point transmitting a beacon at periodic intervals over a communications network, the system comprising:
a wireless local area network (WLAN) radio connectable to the communications network and being configured for communication with the access point; and
a controller operatively connected to the WLAN radio and being configured to:
establish a connection between the WLAN radio and the access point over the communications network;
maintain a count of at least one of a failure to receive a beacon from the access point and a failure of the connection between the WLAN radio and the access point over the communications network; and
if the count exceeds a threshold, reduce the beacon listening interval.

8. The monitoring device of claim 7, further comprising a non-volatile memory (NVM) database configured to store the beacon listening interval.

9. The monitoring device of either claim 7 or claim 8, wherein the controller is configured to cause the WLAN radio to attempt to reestablish the connection with the access point over the communications network in response to the failure of the connection between the WLAN radio and the access point over the communications network.

10. The monitoring device of any of claims 7-9, wherein, after reducing the beacon listening interval by the selected time period, the controller is configured to:
reset the counter; and
cause the WLAN radio to attempt to reestablish the connection with the access point over the communications network.

11. The monitoring device of claim 10, wherein the controller is configured to
maintain a count of the at least one of the failure to receive the beacon from the access point and the failure of the connection between the monitoring device and the access point over the communications network after counter is reset; and
if, after the counter is reset, the count maintained by the counter exceeds the threshold, reducing the beacon listening interval.

12. The monitoring device of claim 11, wherein, if beacon listening interval is at a limit, the controller is configured to:
maintain the beacon listening interval at the limit; and
attempt to reestablish the connection between the monitoring device and the access point over the communications network.

13. The monitoring device of any of claims 7-12, further comprising a camera operatively connected to the controller, the camera configured to capture images within a field of view.
